# EUROPÄISCHE PATENTSCHRIFT

(11) **EP 0 868 599 B1**
(45) Veröffentlichungstag und Bekanntmachung des Hinweises auf die Patenterteilung: **05.03.2003**
(21) Anmeldenummer: 96946064.1
(22) Anmeldetag: 12.12.1996
(51) Int. Cl.: F02C 7/18

(54) **VERFAHREN ZUM BETREIBEN EINER GASTURBINE UND DANACH ARBEITENDE GASTURBINE**
PROCESS FOR OPERATING A GAS TURBINE AND GAS TURBINE OPERATING IN THIS WAY
PROCEDE D'ACTIONNEMENT D'UNE TURBINE A GAZ ET TURBINE A GAZ FONCTIONNANT A L'AIDE DUDIT PROCEDE

(30) Priorität: 21.12.1995 DE 19548100
(43) Veröffentlichungstag der Anmeldung: 07.10.1998
(73) Patentinhaber: SIEMENS AKTIENGESELLSCHAFT, 80333 München (DE)
(72) Erfinder: KAIL, Christoph, D-91052 Erlangen (DE); RUKES, Bert, D-91056 Erlangen (DE)
(86) Internationale Anmeldenummer: DE9602370
(87) Internationale Veröffentlichungsnummer: WO97023715

(56) Entgegenhaltungen:
- GB-A- 705 611
- GB-A- 2 018 362
- GB-A- 2 042 643
- US-A- 4 901 520
- US-A- 5 394 687
- PATENT ABSTRACTS OF JAPAN vol. 009, no. 168 (M-396), 13.Juli 1985 & JP 60 040704 A (NOBORU ITOU), 4.März 1985,

## Beschreibung

Die Erfindung betrifft ein Verfahren zum Betreiben einer Gasturbine, deren Brennkammer verdichtete Luft zugeführt wird, wobei der Gasturbine zugeführte Kühlluft aufgeheizt wird. Sie betrifft weiter eine nach diesem Verfahren arbeitende Gasturbine.

Beim Betrieb einer Gasturbine wird üblicherweise der Brennkammer verdichtete Luft als Verbrennungsluft zugeführt, die dort zusammen mit einem fossilen Brennstoff verbrannt wird. Das dabei erzeugte heiße Rauchgas wird in der Turbine arbeitsleistend entspannt. Zur Erreichung eines hohen Wirkungsgrades ist es aus dem Dokument "Gasturbinen", Fritz Dietzel, Vogel-Verlag, 1974, Seite 27 bis 28, bekannt, die verdichtete Luft durch indirekten Wärmeaustausch mit dem Abgas aus der Turbine aufzuheizen.

Aus der DE-FS 43 36 143 ist es darüber hinaus bekannt, eine Erhöhung des Gesamtwirkungsgrades durch eine Kühlung des Arbeitsmittels in der Turbine zu bewirken. Desweiteren ist es aus der DE-PS 28 36 539 bekannt, daß Verdichteraustrittsluft zur Kühlung der Brennkammer verwendet wird. Zur Vermeidung von Wirkungsgradverlusten wird die dabei erwärmte Verdichteraustrittsluft in die Brennkammer eingeführt.

Ferner wird beim Betrieb einer Gasturbine, diese gekühlt. Dazu ist es aus dem Dokument "Motortechnische Zeitschrift", 49 (1988), Seite 239 bis 240, bekannt, in einer Gasturbine mit offener Luftkühlung die zur Kühlung verwendete Kühlluft durch die Turbinenschaufeln zu führen. Dabei wird ein Teil der verdichteten Luft als Kühlluft verwendet, die dann in der Turbine aus den offenen Turbinenschaufeln austritt und dem Rauchgasstrom zugemischt wird.

Infolge des Abströmens der Kühlluft aus Leit- und Laufschaufeln führt die offene Luftkühlung der Turbinenschaufeln jedoch zu einem Absenken der Temperatur der Rauchgase innerhalb und abströmseitig hinter der Turbine. Dadurch ist der Wirkungsgrad der Gasturbine und damit insbesondere auch der Gesamtwirkungsgrad einer kombinierten Gas- und Dampfturbinenanlage, bei der der Gasturbine ein Dampfturbinenprozeß nachgeschaltet ist, verschlechtert oder nur begrenzt.

Die US-A 5,394,687 offenbart eine einstufige Gasturbine mit einer Leitschaufelreihe und einer Laufschaufelreihe, bei der. die Leitschaufelreihe mittels gemischter Kühlluft gekühlt wird. Die gemischte Kühlluft setzt sich zusammen aus Verdichterluft und aufgeheizter Verdichterluft. Der Gasturbine wird somit zur Kühlung eine aus der Verdichterluft und der aufgeheizten Verdichterluft gemischte Kühlluft zugeführt, die anschließend in der Gasturbine wiederum aufgeheizt und der Verdichterluft zugeführt wird. Somit wird bei einer derartig gekühlten Gasturbine eine Zirkulation der diese beströmenden Kühlluft bewirkt.

Aus der GB-A-2 042 643 ist ein Gasturbine ausgeführtes Flugtriebwerk bekannt, bei dem jeweils Verdichteraustrittsluft zur Kühlung der Brennkammer verwendet wird. Zur Vermeidung von Wirkungsgradverlusten wird die dabei erwärmte Verdichteraustrittsluft in die Brennkammer geführt. Zur Kühlung der Turbine, insbesondere der Turbinenschaufel, wird ebenfalls Verdichterluft verwendet. Die dabei aufgeheizte Verdichterluft wird dann aber nicht der Brennkammer, sondern vielmehr dem Arbeitsraum der Gasturbine zugeführt.

Der Erfindung liegt daher die Aufgabe zugrunde, ein Verfahren zum Betreiben einer Gasturbinen anzugeben, mit dem ein besonders hoher Wirkungsgrad erzielt wird. Weiterhin soll eine zur Durchführung des Verfahrens besonders geeignete Gasturbine angegeben werden, die insbesondere in einer kombinierten Gas- und Dampfturbinenanlage effektiv einsetzbar ist.

Die Aufgabe wird erfindungsgemäß gelöst mit einem Verfahren zum Betreiben einer Gasturbine gemäß Anspruch 1, sowie mit einer Gasturbine nach Anspruch 4 bzw. einer Gas- und Dampfturbinenanlage nach Anspruch 11.

Die Erfindung geht dabei von der Überlegung aus, zur Erhöhung des Wirkungsgrades die bei der Kühlung übertragene Wärme zu nutzen, ohne dabei das Abgas aus der Gasturbine abzukühlen. Dazu sollte die auf die Kühlluft übertragene Wärme ausschließlich über die Kühlluft und an geeigneter Stelle besonders effektiv in den Prozeß wieder eingekoppelt werden. Dies kann durch Rückführen oder Einbringen der wärme vor bzw. direkt in den Verbrennungsprozeß erfolgen.

Die aufgeheizte Kühlluft wird der Brennkammer vorzugsweise zusammen mit der verdichteten Luft zugeführt. Die Zumischung erfolgt zweckmäßigerweise vor der Brennkammer. Das Einbringen der aufgeheizten Kühlluft bewirkt eine direkte Vorwärmung der Verbrennungsluft und somit eine Brennstoffeinsparung. Außerdem führt die Zumischung der aufgeheizten Kühlluft zur verdichteten Luft zu einer Erhöhung der mittleren Expansionstemperatur und dadurch zu einer Steigerung der Turbinenleistung und der Abgastemperatur. Die höhere Abgastemperatur verbessert darüber hinaus den Gesamtwirkungsgrad einer kombinierten Gas- und Dampfturbinenanlage.

Um einen wirkungsvollen Einsatz der Kühlluft in der Gasturbine zu erreichen, wird als Kühlluft ein Teil der verdichteten Luft genutzt. Die dem Verdichter entnommene Kühlluft durchströmt, z.B. in einem geschlossenen Kanalsystem, sowohl die Turbinenschaufeln als auch zweckmäßigerweise die Turbinenwelle und/oder das Turbinengehäuse.

Die Kühlluft durchströmt zweckmäßigerweise eine oder jede Turbinenschaufel, insbesondere die Leit- oder Lauf schaufeln, in einer Kühlschleife. Dabei wird die Kühlluft von ca. 450 bis 500° C vor den Turbinenschaufeln auf etwa 650 bis 700° C nach den Turbinenschaufeln aufgeheizt. Das Einbringen der aufgeheizten Kühlluft zusammen mit der verdichteten Luft in die Brennkammer führt bei einer konstanten Verbrennungstemperatur zu einer Erhöhung der Temperatur der Wärmezufuhr.

Bezüglich der Gasturbine, die einen Verdichter, eine Brennkammer und eine Turbine sowie eine Kühlluftleitung zum Zuführen von Kühlluft in die Turbine und eine Frischluftleitung zum Zuführen von verdichteter Luft in die Brennkammer umfaßt, wird die genannte Aufgabe erfindungsgemäß dadurch gelöst, daß ein Teil der verdichteten Luft zur Kühlung der Turbine abzweigbar ist und daß die in der Turbine aufgeheizte Kühlluft in die Brennkammer einbringbar ist.

Um die in der Turbine, d.h. in den Turbinenschaufeln, aufgeheizte Kühlluft in besonders einfacher Weise mit der verdichteten Luft zu vermischen, ist vorzugsweise eine Abgangsleitung für die aus der Turbine abströmende aufgeheizte Kühlluft an die zwischen dem Verdichter und der Brennkammer angeordnete Frischluftleitung angeschlossen.

In vorteilhafter Ausgestaltung wird die dem auf der Druckseite des Verdichters entnommene Kühlluft durch eine Kühlluftleitung geführt, in die zweckmäßigerweise ein Booster geschaltet ist.

Um jeder einzelnen Turbinenschaufelreihe separat Kühlluft zuführen zu können, sind eine Anzahl von Zugangsleitungen an die Kühlluftleitung angeschlossen. Zweckmäßigerweise ist daher auch zum Abführen der aufgeheizten Kühlluft eine der Anzahl der Zugangsleitungen entsprechende Anzahl von Abgangsleitungen vorgesehen. Die Kühlluftleitung, die Zugangsleitungen, die Kühlschleifen durch die Turbinenschaufeln sowie die Abgangsleitungen und die Frischluftleitung sind zweckmäßigerweise als ein geschlossenes Kanalsystem ausgeführt. Das Kanalsystem durchzieht somit nicht nur die Turbinenschaufeln sondern vorzugsweise auch die Turbinenwelle und/oder das Turbinengehäuse.

Die mit der Erfindung erzielten Vorteile bestehen insbesondere darin, daß durch Zuführen von aufgeheizter Kühlluft in die Brennkammer einer Gasturbine eine Erhöhung der Temperatur der Wärmezufuhr und eine Erhöhung der Abgastemperatur sowie eine Verminderung des Brennstoffverbrauchs bei gleichzeitiger Erhöhung des Wirkungsgrades erzielt wird. Eine derart ausgebildete Gasturbine eignet sich besonders für den Einsatz in einer kombinierten Gas- und Dampfturbinenanlage.

Ausführungsbeispiele der Erfindung werden anhand einer Zeichnung näher erläutert. Darin zeigen:
- Figur 1: schematisch eine Gasturbine mit einem geschlossenen Kühlluftsystem,
- Figuren 2 und 3: eine Gasturbine gemäß Figur 1 mit mehreren Zu- und Abgangsleitungen für Kühlluft bzw. mit mehreren Kühlluftleitungen und
- Figur 4: eine Leit- und eine Laufschaufel einer Turbine gemäß Figur 1 mit Kühlkanälen.

Einander entsprechende Teile sind in allen Figuren mit den gleichen Bezugszeichen versehen.

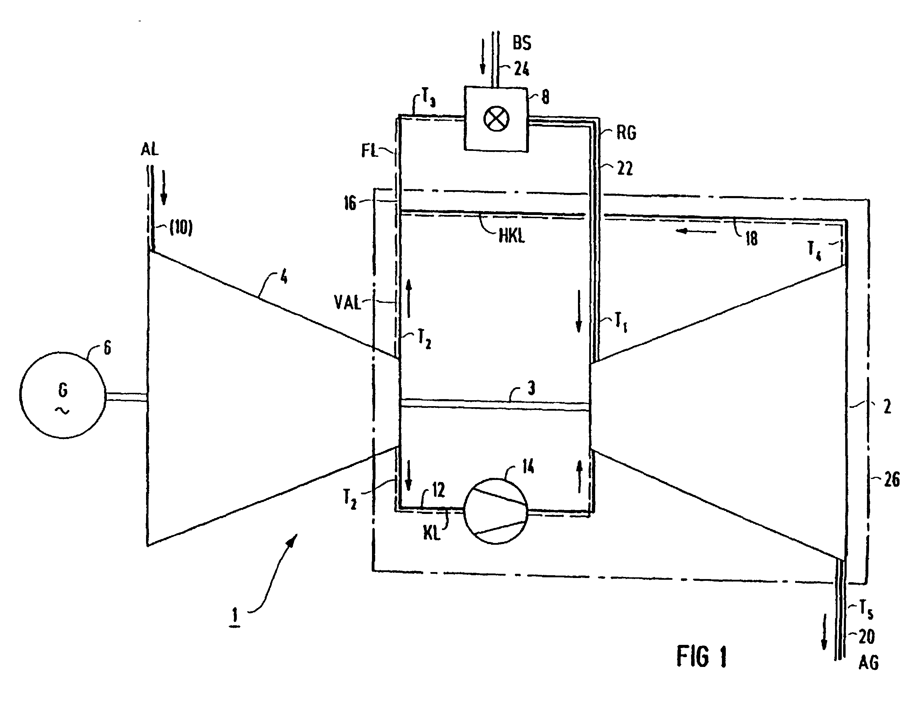

Die Gasturbine 1 gemäß Figur 1 umfaßt eine Turbine 2 mit über eine Turbinenwelle 3 angekoppeltem Luftverdichter 4 und Generator 6. Sie umfaßt weiter eine der Turbine 2 vorgeschaltete Brennkammer 8. Der Luftverdichter 4 weist saugseitig eine Ansaugleitung 10 und druckseitig eine Kühlluftleitung 12 auf, die in die Turbine 2 mündet. In die Kühlluftleitung 12 ist ein Verdichter oder ein Booster 14 geschaltet. Der Luftverdichter 4 weist außerdem druckseitig eine Frischluftleitung 16 auf, die in die Brennkammer 8 mündet. An die Turbine 2 ist eine Leitung 18 für aufgeheizte Kühlluft HKL angeschlossen, die mit der in die Brennkammer 8 mündende Frischluftleitung 16 verbunden ist. Die Turbine 2 weist außerdem eine Abgasleitung 20 auf. Eine Rauchgasleitung 22 verbindet die Brennkammer 8 mit der Turbine 2.

Beim Betrieb der Gasturbine 1 wird der Brennkammer 8 über eine Brennstoffleitung 24 fossiler Brennstoff BS, z.B. Erdgas oder Kohlegas, zugeführt. Der Brennstoff BS wird in der Brennkammer 8 zusammen mit Frischluft FL verbrannt, die ein Gemisch aus verdichteter Luft VAL aus dem Luftverdichter 4 und aufgeheizter Kühlluft HKL aus der Turbine 2 ist. Das bei der Verbrennung entstehende heiße Rauchgas oder Arbeitsmittel RG wird über die Rauchgasleitung 22 in die Turbine 2 geleitet. Dort entspannt sich das Rauchgas RG und treibt die Turbine 2 an. Diese wiederum treibt den Luftverdichter 4 und den Generator 6 an. Das Rauchgas RG verläßt die Turbine 2 als Abgas AG über die Abgasleitung 20 in Richtung auf einen (nicht dargestellten) Kamin. Das Abgas AG kann auch in an sich bekannter, nicht näher dargestellter Art und Weise zur Erzeugung von Dampf in einem Abhitzedampferzeuger einer Dampfturbinenanlage genutzt werden.

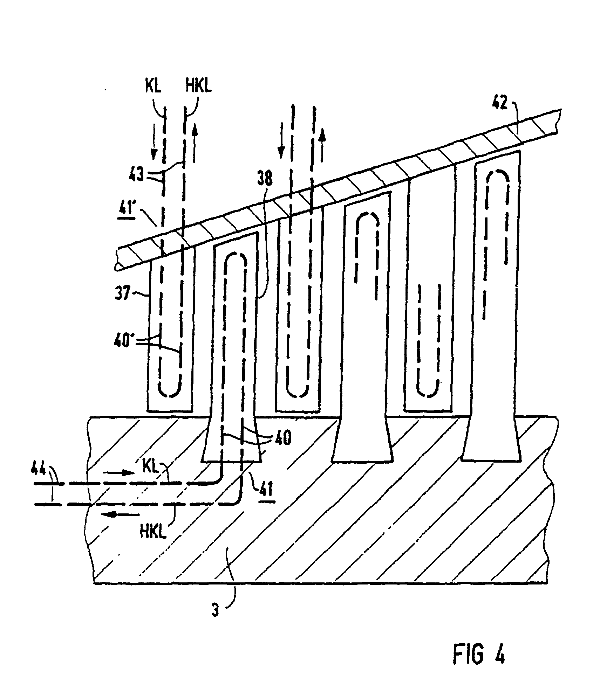

Das Rauchgas RG weist bei Eintritt in die Turbine 2 eine hohe Temperatur T₁ von mehr als 1100°C auf. Daher müssen Teile der Turbine 2, insbesondere die Turbinenschaufeln (Figur 4), gekühlt werden. Zur Kühlung wird ein Teil der verdichteten Luft VAL auf der Druckseite des Luftverdichters 4 als Kühlmittel KL entnommen oder abgezweigt. Das Kühlmittel, d.h. die Kühlluft KL wird der Turbine 2 über die Kühlluftleitung 12 zugeführt. Zur Kompensation von Druckverlusten ist ein Booster 14 in die Kühlluftleitung 12 geschaltet.

Durch indirekten Wärmeaustausch zwischen dem heißen Rauchgas RG und der Kühlluft KL in der Turbine 2, insbesondere in den Turbinenschaufeln (Figur 4), wird die Kühlluft KL aufgeheizt. Die aufgeheizte Kühlluft HKL wird der Turbine 2 über die Leitung 18 entnommen. Die Leitung 18 für aufgeheizte Kühlluft HKL ist an die Frischluftleitung 16 vor der Brennkammer 8 angeschlossen. Dort wird die aufgeheizte Kühlluft HKL direkt der verdichteten Luft VAL zugemischt. Durch die Zumischung wird die verdichtete Luft VAL von einer Temperatur T₂ von etwa 450° C auf eine Temperatur T₃ von etwa 550° C aufgeheizt. Dieses vorgewärmte Luftgemisch wird als Frischluft FL der Brennkammer 8 zugeführt.

Die vom Verdichter 4 abgehende Kühlluftleitung 12, die Kühlschleifen durch die Turbinenschaufeln (Figur 4), die Leitung 18 für die aufgeheizte Kühlluft HKL und die vom Verdichter 4 abgehende Frischluftleitung 16 bilden ein geschlossenes Kühlluftsystem 26.

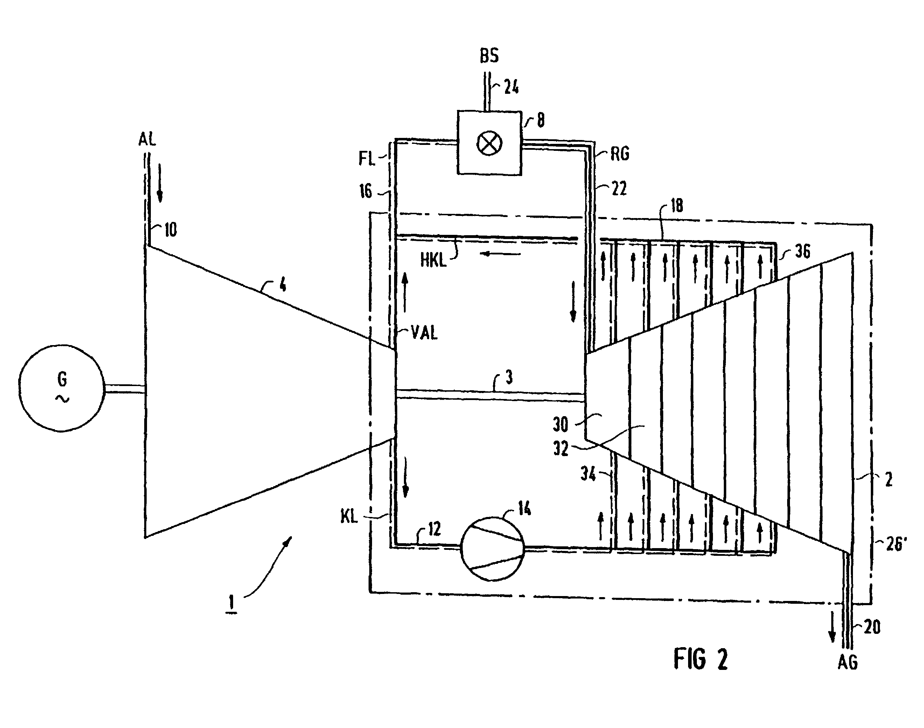

Figur 2 zeigt die Gasturbine 1 gemäß Figur 1 mit einem geschlossenen Kühlluftsystem 26' für alle Leitschaufelreihen 30 und Laufschaufelreihen 32 der Turbine 2. Zur Kühlung aller Leit- und Laufschaufeln ist an die Kühlluftleitung 12 auf der Druckseite des Boosters 14 eine Anzahl von separaten Zugangsleitungen 34 angeschlossen. Jede Zugangsleitung 34 mündet in eine Turbinenschaufelreihe 30, 32. Jeder Zugangsleitung 34 ist eine von der entsprechenden Turbinenschaufelreihe 30, 32 separat abgehende Abgangsleitung 36 für aufgeheizte Kühlluft HKL zugeordnet. Um das Kühlluftsystem 26' zu schließen, ist die oder jede Abgangsleitung 36 an die Leitung 18 für die aufgeheizte Kühlluft HKL angeschlossen.

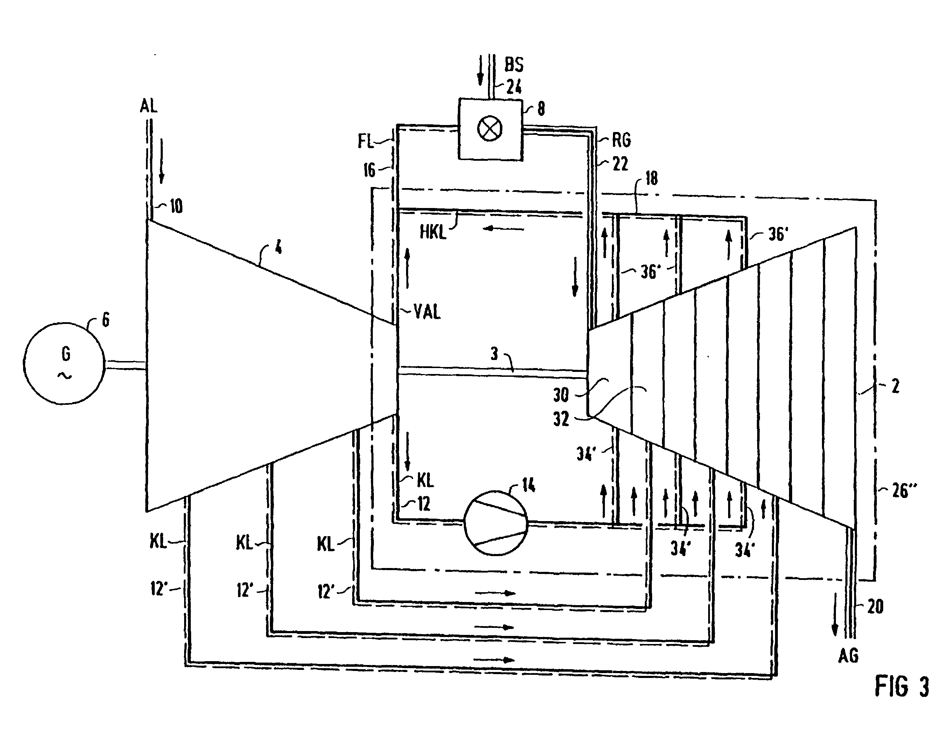

Figur 3 zeigt die Gasturbine 1 gemäß Figur 1 mit einem nur zum Teil geschlossenen Kühlluftsystem 26", bei dem nur die aufgeheizte Kühlluft HKL aus den Leitschaufelreihen 30 genutzt wird. Dazu zweigt wiederum eine Anzahl von Zugangsleitungen 34' auf der Druckseite des Boosters 14 von der Kühlluftleitung 12 ab, wobei jeweils eine Zugangsleitung 34' in eine der Leitschaufelreihen 30 führt. Im Gegensatz zum Ausführungsbeispiel nach Figur 2 ist hier nur den in die oder jede Leitschaufelreihe 30 führenden Zugangsleitungen 34' jeweils eine Abgangsleitung 36' zugeordnet. Jede Abgangsleitung 36' ist wiederum an die Leitung 18 für die aufgeheizte Kühlluft HKL angeschlossen.

Die Laufschaufelreihen 32 werden mit offener Luftkühlung gekühlt. Jeder Laufschaufelreihe 32 ist eine separate, vom Verdichter 4 abgehende Kühlluftleitung 12' zugeordnet. Die Kühlluft KL strömt dabei in der Turbine 2 über die offenen Laufschaufeln der Laufschaufelreihen 32 in den (nicht dargestellten) Rauchgasstrom.

Figur 4 zeigt eine Leitschaufel 37 und eine Laufschaufel 38 der Turbine 2 mit Kühlkanälen 40, 40' einer Kühlschleife 41 bzw. 41'. Die oder jede Leitschaufel 37 wird mittels in der Kühlschleife 41' geführter Kühlluft KL gekühlt. Dabei wird die über die Kühlluftleitung 12 und die Zugangsleitung 34, 34' zu der oder jeder Leitschaufel 37 geführte Kühlluft KL durch im Turbinengehäuse 42 vorgesehene Kanäle 43 geführt. Die zu der oder jeder Laufschaufel 38 geführte Kühlluft KL wird durch in der Turbinenwelle 3 vorgesehene Kanäle 44 geführt.

Die verdichtete Luft VAL mit einer Temperatur T₂ von ca. 450 bis 500° C wird zusammen mit der aufgeheizten Kühlluft HKL mit einer Temperatur T₄ von ca. 650 bis 700° C vermischt, so daß die Temperatur T₃ der Frischluft FL etwa 550 bis 600° C beträgt. Dies führt zu einer besonders hohen Temperatur der Wärmezufuhr in der Brennkammer 8, zu einer Erhöhung der mittleren Expansionstemperatur und zu einer Verminderung des Brennstoffverbrauchs. Nach Eintritt des Rauchgases RG in die Turbine 2 nimmt die Temperatur des Rauchgases RG axial entlang der Turbinenschaufelreihen 30, 32 über die einzelnen Druckstufen der Turbine 2 ab, so daß die Temperatur T₅ des Abgases AG etwa 600°C beträgt. Diese Temperatur T₅ liegt somit höher als die Abgastemperatur bisheriger Gasturbinen von etwa 550° C.

## Patentansprüche

1. Verfahren zum Betreiben einer Gasturbine, deren Brennkammer (8) verdichtete Luft (VAL) zugeführt wird, wobei der Gasturbine (1) zugeführte Kühlluft (KL) aufgeheizt wird, wobei die verdichtete Luft (VAL) in zwei Teilströme aufgeteilt wird,
wobei der erste Teilstrom direkt in die Brennkammer geführt wird, und
wobei der zweite Teilstrom als Kühlluft (KL) für die Turbine (2) dient,
wobei mindestens ein Teil der in der Turbine (2) aufgeheizten Kühlluft (HKL) in die Brennkammer (8) geführt wird,
wobei in eine Kühlluftleitung (12), in der die Kühluft (KL) strömt, ein Booster (14) geschaltet ist,
**dadurch gekennzeichnet, dass**
die Kühlluft (KL) eine oder jede Turbinenschaufel (37, 38) in einer Kühlschleife (41, 41') durchströmt.

2. Verfahren nach Anspruch 1,
**dadurch gekennzeichnet, daß**
die aufgeheizte Kühlluft (HKL) der verdichteten Luft (VAL) zugemischt wird.

3. Verfahren nach Anspruch 1,
**dadurch gekennzeichnet, daß**
die Kühlluft (KL) die Turbinenwelle (3) und / oder das Turbinengehäuse (42) mindestens teilweise durchströmt.

4. Gasturbine mit einem Verdichter (4),
einer Brennkammer (8) und
einer Turbine (2), sowie
einer Kühlluftleitung (12) zum Zuführen von Kühlluft (KL) in die Turbine (2), sowie
einer Frischluftleitung (16) zum Zuführen von verdichteter Luft (VAL) in die Brennkammer (8) zur Durchführung des Verfahrens nach einem der Ansprüche 1 bis 5,
wobei die Turbine (2) kühlluftseitig in eine der Frischluftleitung (16) parallel geschalteten Kühlluftleitung (12) geschaltet ist,
wobei in eine Kühlluftleitung (12), in der die Kühluft (KL) strömt, ein Booster (14) geschaltet ist,
**dadurch gekennzeichnet, dass**
die Kühlluft (KL) eine oder jede Turbinenschaufel (37, 38) in einer Kühlschleife (41, 41') durchströmt.

5. Gasturbine nach Anspruch 4,
**dadurch gekennzeichnet, daß**
die in der Turbine (2) aufgeheizte Kühlluft (HKL) in die zwischen dem Verdichter (4) und der Brennkammer (8) angeordnete Frischluftleitung (16) einbringbar ist.

6. Gasturbine nach Anspruch 4 oder 5,
**gekennzeichnet durch** eine an die Frischluftleitung (16) angeschlossene Abgangsleitung (36) für die aus der Turbine (2) abströmende aufgeheizte Kühlluft (HKL).

7. Gasturbine nach einem der Ansprüche 4 bis 6,
**dadurch gekennzeichnet, daß**
die Kühlluftleitung (12) an die Druckseite des Verdichters (4) angeschlossen ist.

8. Gasturbine nach einem der Ansprüche 4 bis 7,
**dadurch gekennzeichnet, daß**
an die Kühlluftleitung (12) eine Anzahl von Zugangsleitungen (34) angeschlossen ist, von denen jede in eine Turbinenschaufelreihe (30, 32) mündet.

9. Gasturbine nach Anspruch 8,
**dadurch gekennzeichnet, daß**
eine der Anzahl der Zugangsleitungen (34, 34') entsprechende Anzahl von Abgangsleitungen (36, 36') für die aufgeheizte Kühlluft (HKL) vorgesehen ist.

10. Gasturbine nach einem der Ansprüche 4 bis 9,
**dadurch gekennzeichnet, daß**
zur Führung der Kühlluft (KL) ein geschlossenes Kanalsystem (26, 26', 26") durch die Turbinenschaufelreihen (30, 32) und/oder durch die Turbinenwelle (3) und/oder durch das Turbinengehäuse (42) vorgesehen ist.

11. Gas- und Dampfturbinenanlage mit einer Gasturbine nach einem der Ansprüche 4 bis 10.

## Claims

1. Method for operating a gas turbine, to the combustion chamber (8) of which compressed air (VAL) is supplied, cooling air (KL) supplied to the gas turbine (1) being heated, the compressed air (VAL) being divided into two partial streams, the first partial stream being routed into the combustion chamber, the second partial stream serving as cooling air for the turbine,
at least some of the cooling air (HKL) heated in the turbine (2) being routed into the combustion chamber (8),
a booster (14) being inserted into a cooling-air conduit (12) in which the cooling air (KL) flows,
**characterized in that** the cooling air (KL) flows through one or each turbine blade (37, 38) in a cooling loop (41, 41').

2. Method according to Claim 1, **characterized in that** the heated cooling air (HKL) is admixed with the compressed air (VAL).

3. Method according to Claim 1, **characterized in that** the cooling air (KL) flows at least partially through the turbine shaft (3) and/or the turbine housing (42).

4. Gas turbine with a compressor (4),
a combustion chamber (8) and
a turbine (2), as well as
a cooling-air conduit (12) for supplying cooling air (KL) into the turbine (2), and
a fresh-air conduit (16) for supplying compressed air (VAL) into the combustion chamber (8), in particular for carrying out the method according to one of Claims 1 to 4,
the turbine being inserted into a cooling-air conduit (12) which is connected parallel to the fresh-air conduit, a booster (14) being inserted into a cooling-air conduit (12) in which the cooling air flows,
**characterized in that** the cooling air (KL) flows through one or each turbine blade (37, 38) in a cooling loop (41, 41').

5. Gas turbine according to Claim 4, **characterized in that** the cooling air (HKL) heated in the turbine (2) can be introduced into the fresh-air conduit (16) arranged between the compressor (4) and the combustion chamber (8).

6. Gas turbine according to Claim 4 or 5, **characterized by** an offtake conduit (36) for the heated cooling air (HKL) flowing off from the turbine (2), the said offtake conduit being connected to the fresh-air conduit (16).

7. Gas turbine according to one of Claims 4 to 6, **characterized in that** the cooling-air conduit (12) is connected to the delivery side of the compressor (4).

8. Gas turbine according to one of Claims 4 to 7, **characterized in that** a number of intake conduits (34), each of which opens into a row of turbine blades (30, 32), are connected to the cooling-air conduit (12).

9. Gas turbine according to Claim 8, **characterized in that** a number of offtake conduits (36, 36') corresponding to the number of intake conduits (34, 34') are provided for the heated cooling air (HKL).

10. Gas turbine according to one of Claims 4 to 9, **characterized in that** a closed duct system (26, 26', 26") through the rows of turbine blades (30, 32) and/or through the turbine shaft (3) and/or through the turbine housing (42) is provided for routing the cooling air (KL).

11. Gas-turbine and steam-turbine plant having a gas turbine according to one of Claims 4 to 10.

## Revendications

1. Procédé pour faire fonctionner une turbine à gaz, à la chambre de combustion (8) de laquelle est envoyé de l'air (VAL) comprimé, dans lequel on chauffe de l'air (KL) de refroidissement envoyé à la turbine (1 ) à gaz,
dans lequel on subdivise l'air (VAL)comprimé en deux sous-courants,
dans lequel on envoie le premier sous-courant directement à la chambre de combustion et
dans lequel on se sert du deuxième sous-courant comme air (KL) de refroidissement de la turbine (2),
dans lequel on envoie à la chambre (8) de combustion au moins une partie de l'air (HKL) de refroidissement chauffé dans la turbine (2),
dans lequel on branche dans le conduit (12), pour de l'air de refroidissement dans lequel passe de l'air (KL) de refroidissement, une pompe (14) de mise en charge,
**caractérisé en ce que** l'air (KL) de refroidissement passe dans une aube (37, 38) ou dans chaque aube (37, 38) de la turbine suivant une boucle (41, 41') de refroidissement.

2. Procédé suivant la revendication 1,
**caractérisé en ce que** l'on mélange l'air (HKL) de refroidissement qui est chauffé à l'air (VAL) comprimé.

3. Procédé suivant la revendication 1,
**caractérisé en ce que** l'air (KL) de refroidissement passe au moins partiellement dans l'arbre (3) de la turbine et/ou dans l'enveloppe (42) de la turbine.

4. Turbine à gaz comprenant un compresseur (4),
une chambre (8) de combustion (8) et
une turbine (2) ainsi que
un conduit (12) pour de l'air de refroidissement destiné à envoyer de l'air (KL) de refroidissement à la turbine (2), ainsi que
un conduit (16) pour de l'air frais destiné à envoyer de l'air (VAL) comprimé à la chambre (8) de combustion pour la mise en oeuvre du procédé suivant l'une des revendications 1 à 5,
dans laquelle la turbine (2) est montée du côté de l'air de refroidissement dans un conduit (12) d'air de refroidissement branché en parallèle au conduit (16) pour de l'air frais,
dans laquelle il est monté dans un conduit (12) pour de l'air de refroidissement, dans lequel passe l'air (KL) de refroidissement, une pompe (14) de mise en charge,
**caractérisée en ce que** l'air (KL) de refroidissement passe dans une aube (37, 38) ou dans chaque aube (37, 38) de la turbine suivant une boucle (41, 41') de refroidissement.

5. Turbine à gaz suivant la revendication 4,
**caractérisée en ce que** l'air (HKL) de refroidissement chauffé dans la turbine (2) peut être introduit dans le conduit (16) pour de l'air frais disposé entre le compresseur (4) et la chambre (8) de combustion.

6. Turbine à gaz suivant la revendication 4 ou 5,
**caractérisée par** un conduit (36) de dérivation qui est raccordé au conduit (16) pour de l'air frais et qui est destiné à l'air (HKL) de refroidissement qui est chauffé et qui sort de la turbine (2).

7. Turbine à gaz suivant l'une des revendications 4 à 6,
**caractérisée en ce que** le conduit (12) pour l'air de refroidissement est raccordé au côté refoulement du compresseur (4).

8. Turbine à gaz suivant l'une des revendications 4 à 7,
**caractérisée en ce qu'**il est raccordé au conduit (12) pour l'air de refroidissement un certain nombre de conduits (34) d'entrée dont chacun d'entre eux débouche dans une rangée (30, 32) d'aubes de la turbine.

9. Turbine à gaz suivant la revendication 8,
**caractérisée en ce qu'**il est prévu un nombre de conduits (36, 36') de sortie de l'air (HKL) de refroidissement qui est chauffé correspondant au nombre des conduits (34, 34') d'entrée.

10. Turbine à gaz suivant l'une des revendications 4 à 9,
**caractérisée en ce que** pour canaliser l'air (KL) de refroidissement il est prévu un système (26, 26', 26") fermé de canalisations passant dans les rangées (30, 32) des aubes de la turbine et/ou par l'arbre (3) de la turbine et/ou par l'enveloppe (42) de la turbine.

11. Installation à turbine à gaz et à turbine à vapeur ayant une turbine à gaz suivant l'une des revendications 4 à 10.
